# EUROPEAN PATENT SPECIFICATION

(11) **EP 0 337 796 B1**
(45) Date of publication and mention of the grant of the patent: **06.07.1994**
(21) Application number: 89303703.6
(22) Date of filing: 14.04.1989
(51) Int. Cl.: G01J 9/02, H04B 10/00, G02F 2/02

(54) **Device for measuring optical frequency modulation characteristics**
Vorrichtung zur Messung der Kennzeichen der optischen Frequenzmodulation
Dispositif pour mesurer les caractéristiques de modulation de fréquence optique

(30) Priority: 14.04.1988 JP 92783/88
(43) Date of publication of application: 18.10.1989
(73) Proprietor: Nippon Telegraph and Telephone Corporation, Tokyo 100 (JP)
(72) Inventor: Iwashita, Katsushi, Yokosuka-shi Kanagawa 239 (JP)
(74) Representative: Blanco White, Henry Nicholas

(56) References cited:
- ELECTRONICS LETTERS, vol. 19, no. 3, February 1983, pages 102-103, London, GB; A.D. KERSEY et al.: "Demodulation scheme fibre interferometric sensors employing laser frequency switching"
- PATENT ABSTRACTS OF JAPAN, vol. 11, no. 164 (P-580)[2611], 27th May 1987 ; & JP-A-61 296 223 (NIPPON TELEGRAPH AND TELEPHONE) 27-12-1986
- FIRST INTERNATIONAL CONFERENCE ON OPTICAL FIBER SENSORS, Institution of Electrical Engineers, London, 26th - 28th April 1983, pages 48-52; A. DANDRIDGE et al.: "Fiber optic interferometric sensor developments at NRL"
- ELECTRONICS LETTERS, vol. 22, no. 8, 10th April 1986, pages 413-414, Stevenage, Herts, GB; B.L. KASPER et al.: "Balanced dual-detector receiver for optical heterodyne communication at Gbit/s rates"
- THIN SOLID FILMS, vol. 126, 1985, pages 167-176; R.C. BOOTH: "LiNbO3 integrated optic devices for coherent optical fibre systems"

## Description

This invention relates to a device and method for measuring optical frequency modulation characteristics of light.

The invention is applicable to measurement of optical communication equipments. More particularly, this invention is applicable to measurement of modulation characteristics of optical signals which have been modulated in frequency. This invention device is most suitable to measure modulation characteristics of optical signals for coherent light communications which have been emitted from a laser diode and modulated in frequency.

Frequency modulation has been known as an effective method for coherent optical communications. Simple transmitters can be structured by using frequency-modulated signals obtained by giving signals for modulation directly to the laser diode. Frequency-modulated signals obtained by directly modulating a laser diode, however, contain an amplitude modulation component as well as a frequency modulation component. The measurement of the frequency modulation component requires a measurement method which is less prone to the influence of the amplitude modulation component.

The frequency modulation response of laser diode is influenced mainly by the frequency changes caused by thermal effects in the low modulation frequency region, and mainly by the effects of the carrier in the high modulation frequency region. The direction of frequency changes of these two effects, however, are opposite to each other, and the frequency modulation response to the injection current to the laser diode is not uniform. In order to measure the frequency modulation response of a laser diode, there is required a circuit which can faithfully convert changes in frequency of optical signals into changes in voltage.

Fabry-Perot etalons have conventionally been utilized for measurements of this type. A Fabry-Perot etalon is a device comprising two parallel plates between which an object light is entered at an incident angle. An interference pattern is formed when the light is repeatedly reflected between the two parallel plates. If the distance d between the two plates and the angle ϑ are fixed, the interference pattern is determinable by the frequency of the incident light. Etalons which measure changes in frequency (or wave length) of light by the interference pattern are widely known.

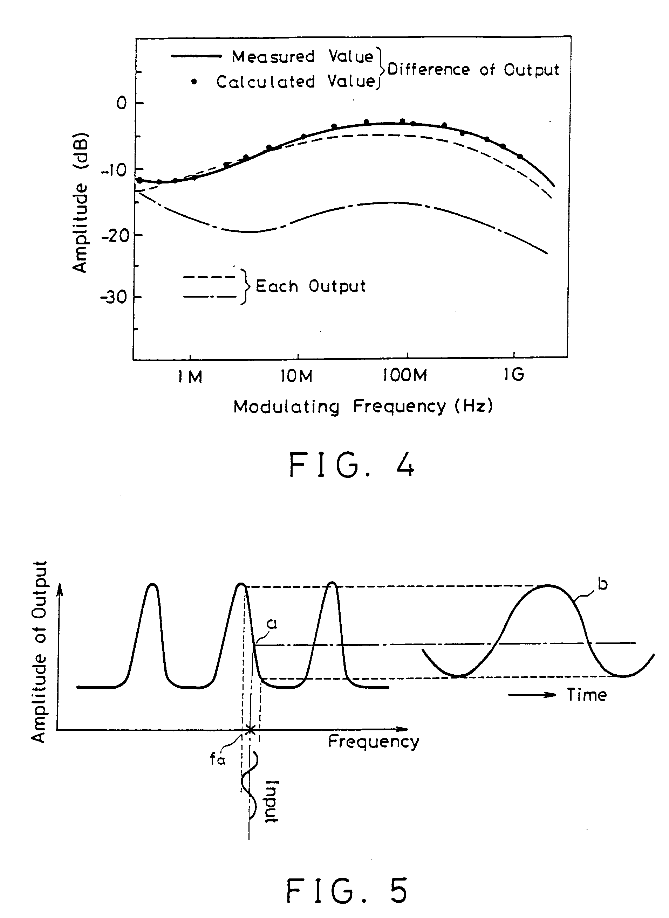

FIG. 5 is a characteristic graph which shows the relation between the input light frequency and the output light amplitude of such an etalon. The optical frequency is plotted on the horizontal axis while the optical power of the output light is plotted on the vertical axis. In other words, the graph shows changes in intensity of the light which is outputted from the etalon against the frequency changes. If a point a at a large gradient of the characteristic curve is selected in the graph and an incident light which has been modulated in the frequency with its center placed at the frequency fa of the point a is given to an etalon, the optical signals in terms of changes in optical power are obtained as shown by the curve b in FIG. 5. The frequency modulation response can be measured by converting to voltage signals with a photo-detector the optical signals which have already been converted to optical power change.

However, the above mentioned instrumentation method is problematic in the following aspects: (1) As the steep changes in frequency are limited, it cannot measure a wider frequency range; (2) as it uses multiple reflection, propagation time difference between reflected waves and traveling waves prevents to measure frequency modulation response in a high frequency range; and (3) distortion occurs when the frequency deviation of input light is large. Particularly, as to the first problem, there has been known a technique of varying the measurable frequency range by moving one of the reflective mirrors of the etalon or by changing the incident angle of the light, but the method needs an extremely precise and complicated mechanism.

Another method which conceivably causes interference patterns is the use of Mach-Zehnder interferometers. Although a Mach-Zehnder interferometer has excellent response characteristic even in the high frequency range and shows gentle changes in optical power over the wider range of frequency of the input light, the light signals which have passed through a Mach-Zehnder interferometer are directly influenced by the amplitude changes of the input light, and therefore it has been regarded heretofore not quite suitable as an intrumentation device for separately measuring the frequency modulation component and the amplitude modulation component.

A paper by A. Dandridge et al, in First International Conference on Optical Fibre Sensors (Insitute of Electrical Engineers, London, 26-28 April 1983), pages 48-52 describes a Mach-Zehnder fibre optic interferometric sensor in which a phase-shift between the two arms of the sensor is used to detect an external signal influencing one of the arms. In order to compensate for low-frequency random fluctuations, phase-tracking compensator adjusts the length of one arm of the interferometer in response to the difference between the two outputs of the interferometer.

Electronics Letters, vol. 19, no. 3, February 1983, pages 102-3 proposes a sensor in which, in order to avoid the need for active phase tracking in the interferometer, the frequency of the input laser light is switched to give a phase shift of $\frac{\text{π}}{\text{2}}$ radians in the interferometer, and the sensor signal is extracted by comparing an output signal (in the form of the difference between the two interferometer outputs) in the two switching states. In the experimental arrangement actually described, the effect of the external influence to be sensed is simulated by mounting a mirror in one arm of the interferometer on a piezoelectric support and moving it cyclically to vary the optical path length in that arm of the interferometer.

This invention was conceived in order to solve problems encountered in the prior art and aims to provide an instrumentation device which can measure frequency modulation component over a wide frequency range and which is extremely simple in mechanism.

The invention provides a measurement device as defined in the appended claim 1.

The invention also provides a measuring method as defined in the appended claim 3.

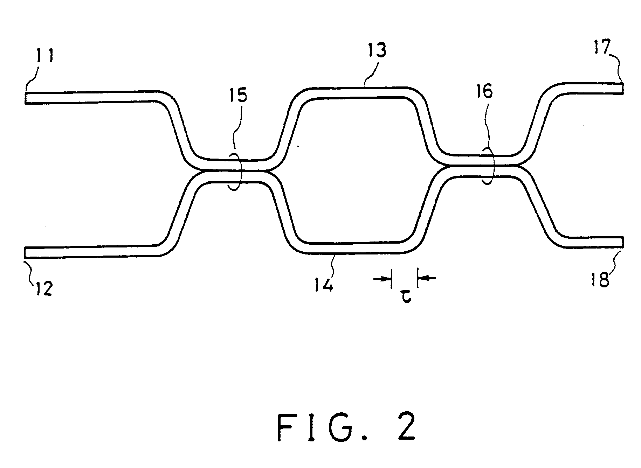

Referring now to the schematic view in Fig. 2, the Mach-Zehnder interferometer herein comprises two input ports 11, 12, a first coupler 15 which reunites with interference the optical signals from two waveguides which respectively guide the input lights from these input ports, two waveguides 13, 14 which guide the two optical signals respectively after they have been passed through the coupler and interfered with each other, a second coupler 16 which couples with interference the optical signals from said two waveguides, and two output ports 17, 18 which output the two optical signals which have been passed the second coupler and interfered with each other, a propagation time difference (τ) being given in the optical path lengths of the two waveguides between the first and the second couplers.

Generally, when an optical signal is inputted at one 12 of the two input ports 11, 12, the optical signal is divided into two waveguides 13, 14 from the first coupler 15, propagate respectively with different propagation time, and when interfered with each other at the second coupler 16, optical signals having the optical power which cyclicly changes depending on the frequency of the input light signal are obtained at the two output ports 17, 18.

At the two optical output ports of the Mach-Zehnder interferometer are obtained optical power signals with anti- phases by the changes in frequency of input light. Moreover, the effect of amplitude changes of input light appears with the same phase between the two optical output ports of the interferometer. Therefore, by subtracting the signals appearing at the two optical output ports, the effect of the amplitude modulation of input light can be cancelled, and the changes in optical power as against the frequency changes becomes twice as much.

This method comprises the steps of receiving the optical outputs from the two output ports and obtaining the difference therebetween to cancel the amplitude change components to a certain extent. This will be explained by the equations below.

The signals at the input port 12 are expressed as below.

$\text{S (t) = A cos{ωt + φ(t)} (1)}$

wherein A denotes the electric field of the light,
ω the angular frequency thereof and φ(t) the frequency modulation signals.
The signals of the two waveguides 13, 14 of the interferometer are represented as follows;

$\text{S₁ (t) = A cos{ωt + φ(t)}/√2 (2)}$

$\text{S₂ (t) = A cos{ω(t - τ) + φ(t - τ) + π/2)}/√2 (3)}$

The signals S₃, S₄ at the two output ports 17, 18 are expressed as below;

$\text{S₃ (t) = -A x cos[ωτ/2 + {φ(t) - φ(t - τ)}/2]}$
$\text{x sin [ωt - ωτ/2 + {φ(t) + φ(t - τ)}/2] (4)}$

$\text{S₄ (t) = -A x sin[ωτ/2 + {φ(t) - φ(t - τ)} /2]}$
$\text{x sin [ωt - ωτ/2 + {φ(t) + φ(t - τ)}/2] (5)}$

As they are electric fields, they are square-law-detected and then average to obtain the following equations.

$\text{S₅²(t) = A² x cos² [ωτ/2 + {φ(t) - φ(t - τ)}/2]/2 (6)}$

$\text{S₆²(t) = A² x sin² [ω τ/2 + {φ(t) - φ(t - τ )}/2]/2 (7)}$

If the path length difference τ is suitably adjusted to obtain the relation below.

$\text{ω τ =} \frac{\text{π}}{\text{2}} \text{+ 2nπ,}$

the equations below will hold.

$\text{S₅²(t) = A² [1 - sin {φ(t) - φ(t-τ)}]/4 (8)}$

$\text{S₆²(t) = A² [1 + sin {φ(t) - φ(t-τ)}]/4 (9)}$

In other words, if signals are received only at one of the two output ports, the device inevitably measures optical power modulation component included in A². It will completely be removed by division, but in practice as the dividers cannot be made responsive to such a high speed, removal by division cannot be used for the measurement of high speed modulation characteristics. The difference between both outputs can be expressed as below.

$\text{S₆²(t) - S₅²(t) = A² sin {φ(t) - φ(t-τ)}/2 (10)}$

Then, the optical power modulation components included in the first terms of the euqations (8) and (9) are removed. Although the components included in the second term remains even after the above processing, it is small enough to be negligible in usual measurements.

The frequency modulation signal φ(t) can be expressed by the equation below. 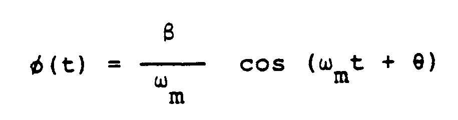
wherein β denotes modulation index, ωₘ modulation angular frequency, and ϑ an arbitrary phase.
If they are substituted in the equation (10), the following relation holds. 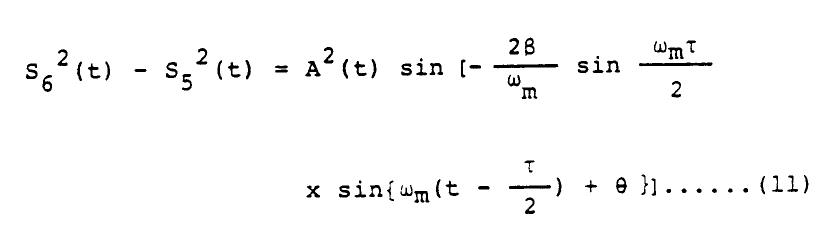
Therefore, the relation below will hold. 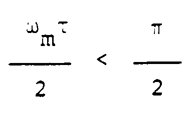
In other words, the optical propagation time difference τ must satisfy the relation expressed below in order to detect the signals faithfully.

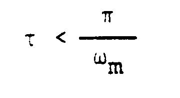

This invention provides a device which can measure the frequency modulation component of signals without influence from the amplitude modulation component by using the difference between the signals appearing at the two output ports of Mach-Zehnder interferometer as the measurement output.

### [Brief Description of Drawings]

FIG. 1 is a structural view to show an embodiment of this invention.

FIG. 2 is a schematic view of the show a Mach-Zehnder interferometer.

FIG. 3 is an explanatory chart of the operation of the embodiment of this invention.

FIG. 4 is a graph to show an example of measurement conducted by this invention device.

FIG. 5 is an explanatory chart of a prior art device operation.

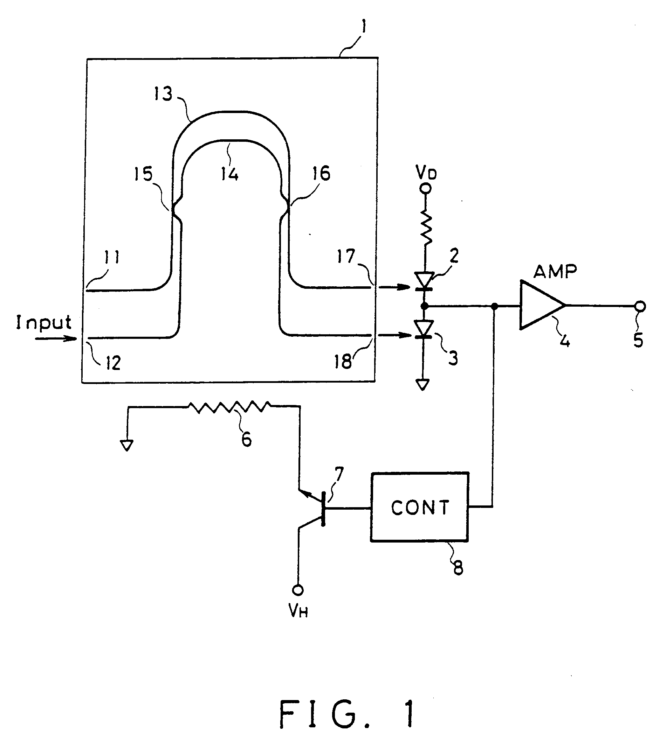

FIG. 1 is a structural view of an embodiment of this invention. The device includes a Mach-Zehnder interferometer to which the light to be measured is inputted after it has been frequency-modulated, and photo-detectors 2 and 3 which convert the optical powers of the output light from the Mach-Zehnder interferometer 1 into electric signals. The number of the photo-detectors provided is two which are respectively mounted at the two optical output ports of the interferometer. As the electric circuit means which outputs the difference between the output signals of the two photo-detectors 2 and 3, the device is so structured to connect the two detectors 2 and 3 in series, whereby the anode of the photo-detector 2 is connected to the cathode of the photo-detector 3, and the difference in the output signals in transmitted to an output terminal 5 via an amplifier 4.

A heater 6 is provided in the Mach-Zehnder interferometer in order to control the difference between the two optical path lengths, and a transistor 7 is provided to control the electric current of the heater 6. The transistor 7 is connected on the control electrode thereof with a controller 8 which gives controlling input in accordance with the difference between the two output signals.

The Mach-Zehnder interferometer 1 comprises optical waveguides 13 and 14 formed on a silicon substrate. The reference numerals 11 and 12 denote optical input ports, 15 and 16 directional couplers, and 17 and 18 two optical output ports. The two optical waveguides 13 and 14 are designed to have lengths which differ in optical propagation time by τ from each other.

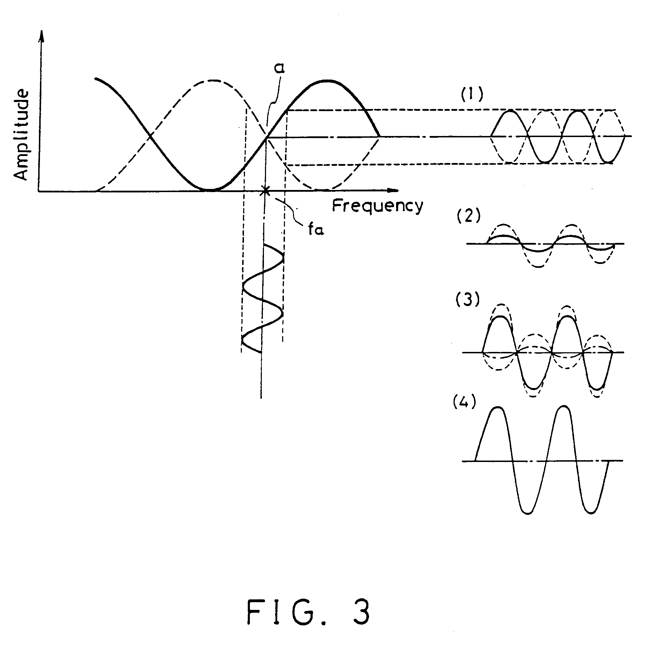

FIG. 2 is a schematic view of a Mach-Zehnder interferometer. As the lengths of the two optical waveguides 13 and 14 differ from each other in optical propagation time by τ, the output lights at the two output ports 17 and 18 interfere with each other. The interference changes by the frequency. Therefore, the relation between amplitude and frequency as shown in FIG. 3 graph is obtained between the input light frequency at the port 12 and the optical power at the two output ports 17 and 18. In the graph in FIG. 3, the solid line shows the characteristics of the output light from the port 17 while the broken line shows the characteristics of the output light from the port 18.

If a port a which has a substantially similar gradient over the two curves is selected, and an optical signal which has been modulated in frequency mainly emitting at the frequency fa corresponding to the point a is given as an input at the port 12, the optical powers at the output ports 17 and 18 change correspondingly to the changes in frequency of the input light as shown in FIG. 3(1). The changes in optical power of the two lights are directed in opposite directions to each other at the ports 17 and 18, and if the signals detected at the two ports 17 and 18 are subtracted from each other, then the amplitude will become twice that shown in FIG. 3(4).

If it is assumed that the input light is the frequency modulation signal obtained by directly modulating a laser diode, it includes not only frequency modulation component but also amplitude modulation component. The effect of the amplitude changes included in the input light after the outputs at the ports 17 and 18 is as shown in FIG. 3(2). In FIG. 3(2) and (3), the solid line represents the small amplitude modulation component and the dot-and-dash line expresses the large amplitude modulation component. When the amplitude modulation component has the same phase as that of the amplitude component at the port 17 which has been converted from frequency component, the optical amplitude at the port 17 becomes larger as shown in FIG. 3(3) while that at the port 18 becomes smaller. However, the effect of the two amplitude changes is cancelled by subtracting one of the signals detected at the two ports 17 and 18 from the other as shown in Fig. 3.

This embodiment is so structured that optical paths will change effectively in accordance with the temperature controlled by the heater 6 to thereby vary said time τ. In other words, the signal representing the difference between the two photo-detectors 2 and 3 will be given at the input of the controller 8. The controller 8 comprises a comparator which compares the input signal with zero voltage and a low-pass filter which passes the output from the comparator so that the signals representing said difference becomes zero voltage in average when it is given in the input.

Therefore, even if the central frequency fa of the object signals shown in FIG. 3 fluctuates, the point a will follow the movement to come to be positioned at the intersection of the solid line with the broken line.

FIG. 4 shows an example of measurement result obtained by means of this embodiment device. The graph shows the result of the measurement of the levels of detected outputs or signals which represents said difference. The light has been modulated in frequency by direct modulation method of a laser diode, and the frequency plotted on the horizontal axis represents the modulated frequency. As a comparison, the result of measurement of one output light at an output port of the same Mach-Zehnder interferometer is shown in the graph as against the measured lights at two output ports. The values represented with filled circles are the calculated frequency modulation responses which are expected to appear. In the graph of FIG. 4, the one represented with a-dot-and-dash line has the frequency modulation component and amplitude modulation component in opposite phases to each other. Therefore, the measured amplitude is small. On the other hand, the one expressed with broken line has the two components in the same phase. The result indicates that when only one of the outputs from the Mach-Zehnder interferometer is measured, due to the effect of the amplitude modulation component included in the object signal, the frequency modulation component is not properly measured. But when the difference beween the output lights from the two output ports is measured, the frequency modulation component alone can be separated and measured.

## Claims

1. A device for measuring optical frequency modulation characteristics, comprising a Mach-Zehnder interferometer that in operation receives as input light to be measured that has been frequency modulated, two photodetectors, one at each of the output ports of the interferometer, to convert the optical power of the output light from the interferometer into electrical signals, electric circuit means arranged to output signals representing the difference between the said electrical signals from the photodetectors, and path control means for controlling the difference between the path lengths of the said two optical paths of the interferometer, whereby the Mach-Zehnder interferometer comprises two wave guides formed on a substrate, the path control means includes a heater for controlling the temperature of the substrate and thereby controlling the difference between the path lengths of the interferometer, and controlling means is arranged so to control the heater as to make the average of the difference between the said electrical signals from the photodetectors tend to zero.

2. A measurement device as claimed in claim 1, wherein the path control means includes filter means, coupled to the said output of the said photodetectors, for integrating an output of the said photodetectors.

3. A method of measuring optical frequency modulation characteristics of a beam of light, which comprises dividing the beam, passing the divided beams along paths of different optical lengths, whereby the said paths of different optical lengths are provided by wave guides formed on a substrate, recombining the beams to produce two combined beams, converting the optical power of the output light of the two combined beams into electrical signals, measuring the difference between the electrical signals in the two combined beams, and so controlling the temperature of the substrate and thereby controlling the difference between the optical lengths of the two paths as to make the average of the difference between the said electrical signals tend to zero.

4. A method as claimed claim 3, wherein the product of the angular frequency of the modulating signal multiplied by the difference in travel times along the two optical paths is less than π radians.

## Patentansprüche

1. Vorrichtung zum Messen der Kennzeichen der optischen Frequenzmodulation, umfassend ein Mach-Zehnder-Interferometer, welches im Betrieb als Eingabe zu messendes Licht empfängt, welches frequenzmoduliert wurde, zwei Photodetektoren, einer an jedem der Ausgänge des Interferometers, um die optische Leistung des ausgehenden Lichts des Interferometers in elektrische Signale zu wandeln, elektrische Schaltkreise, die vorgesehen sind, um Signale auszugeben, die die Differenz zwischen den besagten elektrischen Signalen der Photodetektoren repräsentieren, und ein Wegkontrollmittel zum Kontrollieren der Differenz zwischen den Weglängen der besagten beiden optischen Wege des Interferometers, wobei das Mach-Zehnder-Interferometer zwei auf einem Substrat ausgebildete Wellenleiter umfaßt, das Wegkontrollmittel eine Heizung zur Temperaturkontrolle des Substrats einschließt und somit die Differenz zwischen den Weglängen des Interferometers kontrolliert, und ein Kontrollmittel angeordnet ist, um die Heizung zu kontrollieren, so daß der Mittelwert der Differenz zwischen den besagten elektrischen Signalen der Photodetektoren gegen Null strebt.

2. Meßvorrichtung nach Anspruch 1, wobei das Wegkontrollmittel Filtermittel einschließt, die an den besagten Ausgang der besagten Photodetektoren zum Integrieren eines Ausgangssignals der besagten Photodetektoren gekoppelt sind.

3. Verfahren zur Messung der Kennzeichen der optischen Frequenzmodulation eines Lichtstrahls, welches umfaßt, den Strahl zu teilen, die geteilten Strahlen auf Wegen unterschiedlicher optischer Länge weiterzuleiten, wobei die besagten Pfade unterschiedlicher optischer Länge durch auf einem Substrat ausgebildete Wellenleiter vorgesehen werden, die Strahlen wieder vereinigt werden, um zwei kombinierte Strahlen zu erzeugen, die optische Leistung des Ausgangslichts der zwei kombinierten Strahlen in elektrische Signale zu wandeln, die Differenz zwischen den elektrischen Signalen in den beiden kombinierten Strahlen zu messen und so die Temperatur des Substrats zu kontrollieren und damit die Differenz zwischen den optischen Weglängen der beiden Pfade zu kontrollieren, um den Mittelwert der Differenz der besagten elektrischen Signale gegen Null streben zu lassen.

4. Verfahren nach Anspruch 3, wobei das Produkt der Kreisfrequenz des modulierten Signals multipliziert mit der Laufzeitdifferenz entlang der beiden optischen Wege kleiner als π ist.

## Revendications

1. Dispositif de mesure des caractéristiques de modulation de fréquence optique, comprenant un interféromètre Mach-Zehnder qui, en fonctionnement, reçoit à son entrée de la lumière destinée à être mesurée et qui a été modulée en fréquence, deux photodétecteurs, l'un à chacune des bornes de sortie de l'interféromètre, pour convertir la puissance optique de la lumière de sortie provenant de l'interféromètre en signaux électriques, des éléments de circuit électrique agencés pour générer à leur sortie des signaux représentant la différence entre lesdits signaux électriques provenant des photodétecteurs, et des moyens de commande de cheminement pour asservir la différence entre les longeurs desdits deux cheminements optiques de l'interféromètre, dispositif dans lequel l'interféromètre Mach-Zehnder comprend deux guides d'ondes formés sur un substrat, les moyens de commande de cheminement incluent un appareil de chauffe pour asservir la température du substrat et ainsi asservir la différence entre les longueurs de cheminement de l'interféromètre, et dans lequel des moyens de commande sont agencés de manière à commander l'appareil de chauffe de telle sorte que la moyenne des différences entre lesdits signaux électriques provenant des photodétecteurs tende vers zéro.

2. Dispositif de mesure selon la revendication 1, caractérisé en ce que les moyens de commande de cheminement incluent des moyens à effet de filtre couplés à ladite sortie desdits photodétecteurs, pour l'intégration d'une sortie desdits photodétecteurs.

3. Procédé de mesure des caractéristiques de modulation de la fréquence optique d'un faisceau lumineux, qui comprend les phases consistant à diviser le faisceau, faire passer les faisceaux divisés le long de cheminements de longueur optique différente, lesdits faisceaux de longueur optique différente étant fournis par des guides d'ondes formés sur un substrat, recombiner les faisceaux pour produire deux faisceaux combinés, convertir la puissance optique de la lumière de sortie des deux faisceaux combinés en signaux électriques, mesurer la différence entre les signaux électriques au niveau des deux faisceaux combinés, et ensuite commander la température du substrat et ainsi commander la différence entre les longueurs optiques des deux cheminements de manière à faire tendre vers zéro la moyenne des différences entre lesdits signaux électriques.

4. Procédé selon la revendication 3, caractérisé en ce que le produit de la fréquence angulaire du signal de modulation, multipliée par la différence des temps de trajet le long des deux chemins optiques, est inférieur à π radians.
